# EUROPEAN PATENT APPLICATION

(11) **EP 2 551 811 A1**
(43) Date of publication of application: **30.01.2013**
(21) Application number: 11193339.6
(22) Date of filing: 13.12.2011
(51) Int. Cl.: G06Q 10/10, G06Q 40/04

(54) **Method and system for integrating event processes in investment banking and custody lines of business**

(30) Priority: 26.07.2011 IN MU21222011
(71) Applicant: Tata Consultancy Services Limited, Maharashtra (IN)
(72) Inventor: Gupta, Devesh, Gurgaon (IN); Agarwal, Rahul, Gurgaon (IN)
(74) Representative: Clark, David Julian

(57) **Abstract**

A method and system for integration of corporate action event processing by multiple LOBs in a capital market is disclosed. The method of the present invention enables identification of common and distinct functionalities/behaviors of each of the IB and custodian LOBs dealing with the processing of the corporate action events. Based on the nature of the received event, the analysis is done to determine whether the received event is meant for Investment Bank (IB) LOB or Custodian LOB. As a result of the determination, the details related to the said event processed by either IB LOB or custodian LOB is displayed to the user on a single user interface module configured to display the details of the corporation events handled by both of the LOBs, i.e. IB LOB and Custodian LOB.

## Description

### FIELD OF THE INVENTION

The invention generally relates to the field of processing of plurality of events related to corporate action in capital markets. More particularly, the invention relates to a method and system for integrating the processing of corporation events received at Investment Bank and Custody LOB level.

### DEFINITION OF THE TERMS:

**Corporate Action (CA):** A corporate action is an event initiated by a public company that affects the securities (equity or debt) issued by the company. Some of corporate actions include declaration of a dividend, coupon payment, stock splits, sell and purchase of a share that may be directly or indirectly related to the shareholders or bondholders.

**Custody or Custodian:** A custodian, or a custodian bank, sometimes referred as a global custodian bank is a financial institution that has a role of safekeeping assets or securities such as stocks, bonds, commodities such as precious metals and currency (cash) and arrange settlement of any purchases and sales and deliveries in or out of such securities of a company or a firm engaged in a particular business.

**Investment Bank (IB):** An Investment Bank (IB) is a financial institution that helps individuals, corporations and governments in increasing the capital funds by way of acting as the agents of these entities in the issuance of securities. The IB facilitates transactions, market-making, promotion of securities etc for these entities who are considered to be the clients of the IB.

**Line of Business (LOB):** A Line of business (LOB) is a general term which often refers to a set of one or more highly related products which service a particular customer transaction or business need.

### BACKGROUND OF THE INVENTION

Corporate entities have been actively involved in the transaction related processing of capital markets. Such corporate entities or firms are listed in public stock exchange wherein the stakeholders or shareholders invest their capital funds by purchasing the share for these companies. These capital markets such as public stock exchange are dynamic and fluctuate at a faster rate. Therefore, the parties involved in various transactions related to the capital markets such as corporate entity, shareholders or stakeholders, government agencies need to track the dynamic fluctuation of capital markets.

One of the key components that affect such fluctuation in the capital market is a corporate action event. A corporate action event occurs when a company's capital structure or financial position changes, affecting a security, such as stock, issued by that company. Company stock buy-backs, elective dividends, tender offers, corporate mergers, stock splits, redemptions, spin-offs, rights issues, and periodic income payments are a few examples of the almost 1 billion corporate action events that occur in a single year worldwide.

A typical corporate action for example may be related to sale or purchase of shares of a particular company by different stakeholders or clients investing in the capital market. If the share of the said company falls, a corporate action event in the form of announcement will be delivered to the shareholders, custodians and Investment Banks. All of these collectively perform the task of processing of the received corporate action events.

Today, as the information technology has grown in leaps and bounds, the proceedings of the stock exchange markets have been implemented using computer-based systems for processing of the various corporate action events. That is the entire tracking and evaluating of various corporate action events in the capital market is now made feasible using computer-based systems. As a result of such systems and accordingly the online facilities support, the clients or shareholders or investors have the feasibility to view the status of their shares and securities they hold of the particular company by way of investing in capital markets.

For tracking or monitoring and thereby processing the events related to corporate actions, the IT framework of a Custodian Bank or an Investment Bank is involved. These Banks have their own Line of business (LOB) for collecting event information, analyzing the events, notifying the investors that may be affected by the received event information, and the remedies to be undertaken for avoiding any business loss due to the corporation action event etc.

These corporate action events may involve processing of various complex tasks in order to process each event such that an appropriate action is taken to avoid any further damage to business considerations. Hence, the significant task while processing the corporate action event is to correctly identify the event and take further steps to avoid any business loss. The custodians, Investment Bankers, stakeholders thus need to communicate collaboratively to process the corporate action events generated.

In the background art, the custodians or Investment Banks maintaining LOBs to process various corporate action events are geographically dispersed from the stakeholders, agents and other parties involved in the entire transactions. Further, for each of these LOBs, there may be separate sub-LOBs that may be located in different geographical locations having the tasks similar or with finer variances as implemented by the related to the parent LOB.

Thus, the custody and IB (Investment Bank) functions within a given bank work as separate entities and are handled by separate group of users. There are generally two disparate systems, one addressing the requirements of a custodian and the other one addressing the requirements of an Investment Bank (IB).

However, the present scenario of handling corporate events by separate entities leads to several operational issues such as:
- Logistical issues
- Procurement of separate software licenses and hardware equipments
- Coordination with multiple vendor partners to support multiple systems
- Increased Costs
- Increased cost of software licenses to support multi-systems
- Increase cost of hardware to support multi-systems
- Large OPS (Operations) user base
- Un-optimized OPS user base to support the operations for both IB & Custody
- Upgrades and Maintenance
- Increased cost of system upgrade & maintenance as upgrades needs to be applied in multiple systems

Now, as-far-as the corporate action events are concerned, each of the events may be either processed by custody LOB or IB LOB. Additionally, the processes, functionalities and behaviors of these LOBs are similar with very few variances. Therefore, procuring two separate licenses, possessing multiple hardware requirements, individual man-power for each of the LOBs separately leads to wastage of money, time and resources.

In the developing countries like India, it is not feasible to spend enormous amount of time and resources for tracking and evaluating the corporate action events by the entities located at disparate locations taking into consideration the similar tasks shared by these entities.

As will be appreciated, there is a long felt need for an improved method and system for processing of various corporate action events received by either custody level LOB or IB level LOB by way of integrating both the LOBs on a single user interface platform.

More particularly, there is a need to provide a single user interface platform capable of providing flexible options for a user to view the status and other information related to the event being processed individually by multiple LOBs and thereby alleviating the limitations as outlined in the background art.

### OBJECTIVES OF THE INVENTION

The principal objective of the present invention is to enable a method and system for integrating the functionalities of at least one Investment Bank (IB) LOB and at least one custodian LOB on a single user interface platform.

Yet another objective of the invention is to enable a method and system for capturing common and distinct behaviors or functionalities related to the at least one Investment Bank (IB) LOB and the at least one custodian LOB.

Yet another objective of the invention is to capture a golden copy of announcement related to at least one corporate action event.

Yet another objective of the invention is to enable determining whether the said received golden copy of announcement belongs to the at least one Investment Bank line of business (LOB) or the at least one custodian line of business (LOB).

Still another objective of the invention is to do end-to-end processing of the received at least one event as a result of said determination by displaying the required specifications related to either the at least one Investment Bank LOB or the at least one custodian LOB on the said single user interface.

### SUMMARY OF THE INVENTION

Before the present methods, systems, and hardware enablement are described, it is to be understood that this invention is not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention.

The present invention enables a method and system for integration of the functionalities of the IB (Investment Bank) LOB and that of the custody LOB meant for processing the different corporation events in the capital market via a single unified user interface platform.

The method proposed in the present invention enables to perform the steps of:
a) Storing the said captured common and distinct behaviors or functionalities related to the at least one Investment Bank LOB and the at least one custodian (LOB).
b)Receiving a golden copy of announcement related to the at least one corporate action event.
c) Determining whether the said received golden copy of announcement belongs to the at least one Investment Bank line of business (LOB) or the at least one custodian line of business (LOB). And
d) Dynamically processing the received at least one event as a result of said determination thereby displaying the event specific details related to the at least one Investment Bank LOB or the at least one custodian LOB on the said single user interface platform.

The system of the proposed invention comprises:
a) A database to store the said captured common and distinct behaviors or functionalities related to the at least one Investment Bank LOB server and the at least one custodian (LOB) server.
b) A receiving module to receive a golden copy of announcement related to the said at least one corporate action event.
d) A determining means to determine whether the said received golden copy of announcement belongs to the at least one Investment Bank line of business (LOB) server or the at least one custodian line of business (LOB) server.
e) An end-to-end processing means to dynamically process the received at least one event as a result of said determination. And
f) A display means to display the event specific details related to the at least one Investment Bank LOB or the at least one custodian LOB on the said single user interface platform.

### BRIEF DESCRIPTION OF DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and architecture disclosed in the drawings:
Figure 1 schematically illustrates a bock dia gram **100** containing different system elements for integration of Investment Bank (IB) LOB server and custodian LOB server in accordance an embodiment of the invention.
Figure 2 is a system architecture diagram 200 illustrating the integration of event processing of Investment Bank (IB) LOB server and custodian LOB server in accordance to an exemplary embodiment of the invention.
Figure 3 is a flow diagram 300 illustrating the display of LOB-specific event details to a user based on determination of LOB of the user in accordance to an embodiment of the invention.
Figure 4 illustrates a flow chart 400 depicting the steps followed for integration of event processing of IB LOB server and custodian LOB server in accordance to an exemplary embodiment of the invention.

### DETAILED DESCRIPTION:

The description has been presented with reference to an exemplary embodiment of the invention. Persons skilled in the art and technology to which this invention pertains will appreciate that alterations and changes in the described method and system of operation can be practiced without meaningfully departing from the principle, spirit and scope of this invention.

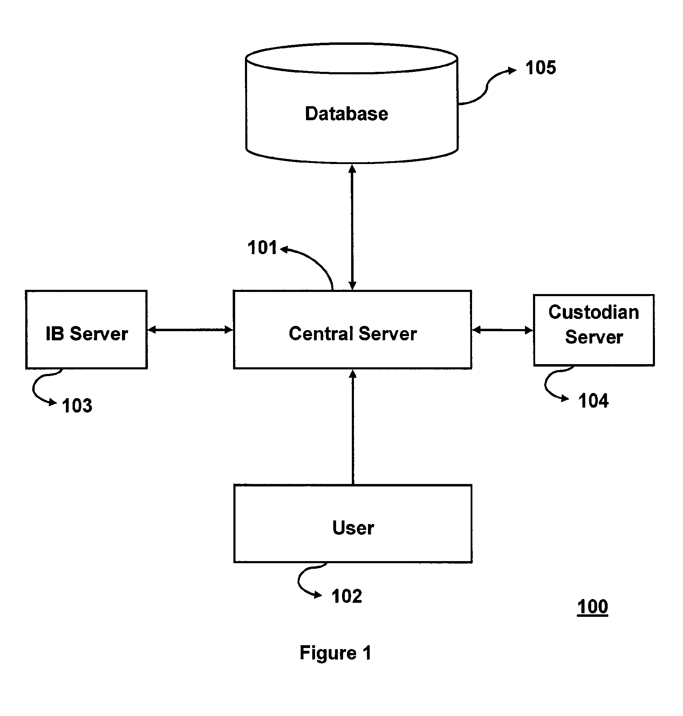

Referring to figure 1 is a system diagram **100** for integration of IB (Investment Bank) server and custody specific LOB server for processing the corporate action events in accordance to an embodiment of the present invention.

As illustrated in figure 1, a central server **101** is configured to process the corporate action events received from the capital market. In an embodiment of the present invention, the said central server **101** may be any device capable of wireless or wire line communication, including, but not limited to a computer, laptop, mobile phone, smart phone, cell phone, satellite phone, walkie-talkie, handheld device, personal digital assistant (PDA), mobile network appliance, or an email, instant messaging, or chat device.

As illustrated in the figure 1, the IB (Investment Bank) LOB server **103** and the custodian specific LOB server **104** are integrated to the central server **101** to provide configuration for processing the corporate action events received that need to be handled either by the IB (Investment Bank) LOB server **103** or the custodian specific LOB server **104**.

The IB specific LOB server **103** is configured to process the corporate action events received in the capital markets specific to the Investment Bank line of business (LOB). Similarly, the custodian specific LOB server **104** is configured to process the corporate action events received in the capital markets specific to the custodian bank line of business (LOB).

Further, a database **105** is illustrated in a figure 1, electronically coupled to the central server **101.** The database **105** is further divided into three sections or layers, respectively storing the information such as common functionalities, common functionalities with finer variances and distinct functionalities the IB (Investment Bank) specific LOB server **103** and custody specific LOB server **104** performing the task of handling various corporate actions captured in the capital market.

The corporate action event may be received in the form of a notification feed that may be received by the central server **101** from the event initialized device (not shown in figure 1) such as market vendor servers using communication protocol means including but not limited to WAN, LAN, MAN, Internet or combinations thereof.

As illustrated in figure 1, a user **102** is connected to the central server **101** interested in viewing the details related to plurality of corporate events received for either IB specific LOB server **103** or custodian specific LOB server **104.**

### BEST ENABLEMENT MODE:

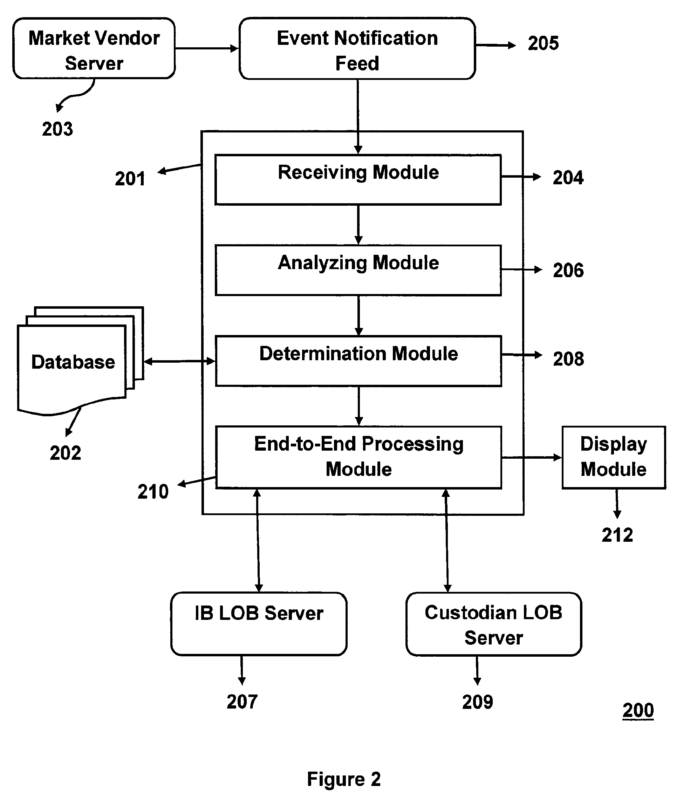

The best enablement mode of the present invention will now be described by referring to figure 2. Figure 2 refers to a system architecture diagram **200** illustrating the integration of event processing of IB (Investment Bank) LOB server and custodian LOB server in accordance to an exemplary embodiment of the invention.

In accordance to this exemplary embodiment, as illustrated in figure 2, a central server **201** is electronically coupled with plurality of LOB servers such as IB (Investment bank) server **207,** custodian LOB server **209.** The task of these LOB servers is to perform various tasks in order to process various corporate action events occurring in the capital markets. Further, a database **202** is illustrated in figure 2 that is electronically communicated to the central server **201.**

According to an exemplary embodiment, the entire lifecycle of the corporate action processing for both IB LOB server **207** and custodian LOB server **209** is analyzed to derive following observations:
- There are common behaviors or functionalities for IB (Investment Bank) LOB server **207** and custody server **209.**
- There are common behaviors with finer variances related to IB (Investment Bank) LOB server **207** and custody LOB server **209.**
- There are distinct behaviors or functionalities for IB (Investment Bank) LOB server **207** and custody LOB server **209.**

These observations are captured to identify the common functionalities, common functionalities with finer variances and distinct functionalities performed by the IB LOB server **207** and custody LOB server **209** while processing multiple corporate action events.

The database **202** is therefore further segregated into three layers or sections storing the identified common functionalities, common functionalities with finer variances and distinct functionalities performed by the IB LOB server **207** and custody LOB server **209** respectively.

In accordance to the exemplary embodiment, a notification feed **205** is received related to a corporate action event from a market vendor server **203** in the capital market. The said notification feed is received by a receiving module **204** of the central server **201** that is electronically coupled to the Investment Bank LOB server **207** and the Custodian LOB server **209** illustrated in figure 2. Now, the received corporate action event notification feed **205** may be meant to be processed by either the IB (Investment Bank) LOB server **207** or custodian LOB server **209.**

According to this exemplary embodiment, as illustrated in figure 2, the received notification feed is analyzed by analyzing module **206.** The analyzed module **206** analyses various keywords, terminologies and nomenclatures in the content of the received notification feed **205.** A determination module **208** based on the analyzed content in the notification feed and using the stored common functionalities, common functionalities with finer variances and distinct functionalities in the database **202,** determines whether the received corporate action event is for IB (Investment Bank) LOB server **207** or custody LOB server **209.**

The determination module **208** implements the task of determination of appropriate LOB server based on the analyzed content in the notification feed and correlating the content with the functionalities stored in the database **202** for each of the LOB servers. For example, in an exemplary embodiment, the determination module **208** refers to the content analyzed in the feed **205** to derive and locate information such as source or origin of event such as news channels or financial institutes, the parties involved in the corporate action such as agents or depositories and affected customers due to such events including stakeholders or shareholders in the capital markets etc.

Further, this analysis is compared with the stored functionalities in the database **202** as illustrated in figure 2 storing information about format, type, application and other related information about the plurality of corporation events and their processing by each of the LOB servers so that it is possible to correlated the corporate action notification feed **205** received to the functionalities stored in the database **202** in order to determine an appropriate LOB server for processing the event.

As a result of determination of an appropriate LOB server by the determination module **208,** the received corporate action event from the market vendor server **203** is then dynamically processed by an end-to-end processing module **210** with the help of determined LOB server, i.e. either IB LOB server **207** or custody LOB server **209** connected to the said end-to-end processing module **210** as illustrated in figure 2.

The processing of the received corporate action event is now further described in detail. A golden copy of corporate action event received in the event notification feed **205** is published to an end-to-end event processing module **210.** As a result of this publication, the system by means of determination module **208** will fetch the event processing level (Custody or IB) from BU (Business Unit) details. Event processing level will be fetched from BU-Entity relationship. Event processing level can be either for Custody LOB server **209** or IB (Investment Bank) LOB server **207.** If the event processing level is for IB (Investment Bank) server **207,** then the processing will be done on composite events per market. If the event processing level is for Custody LOB server **209,** then the processing will be done on depot (Depository) level events.

The common processing with finer variances layer in the database **202** comprises an enhanced rule framework within application to support finer variances in processing the similar functionality. This layer can be further configured to facilitate addition of new business rules capable of handling the various events to be processed by both custody and IB (Investment Bank) business sceneries. For example, it can be configured to add new rules related to tax liabilities for the corporate, configuration of different tax rates on different types of positions at the corporate level etc.

Further, the common processing with finer variances layer is configured to modify or update the existing rules stored for the processing of events in the different capital markets. This module is feasible to modify the existing rules required for handling both custody and IB (Investment Bank) LOB servers. For example, the existing rules on notifications can be modified to allow generation of additional notifications to the IB (Investment Bank) server clients such as investors or stakeholders. Further, the common processing with finer variance layer in the database **202** is configured to divide or split the existing rules to create more variances.

As illustrated in figure 2, a display module **212** is shown that allows a user to view drill-down processing event information for each of the processed corporate action events. Further, the central server **201** further includes a plug and play module (Not shown in figure 2) that comprises additional features for the processing of the events as per the requirement of a user interested in viewing the drill-down details for the processed event.

For example, by utilizing these additional features, it is possible to tag each of the newly added functionalities either in the IB (Investment Bank) LOB server or the custodian LOB server. Further, there is provided an ON/OFF indicator to interactively allow the user to enable or disable the display of event processing details processed either by custodian LOB server or IB (Investment Bank) LOB server. A flag may be raised by the user to select the LOB server in which he/she is interested and accordingly the detail processing of the events by the selected LOB server will be displayed by means of display module 212 to the user.

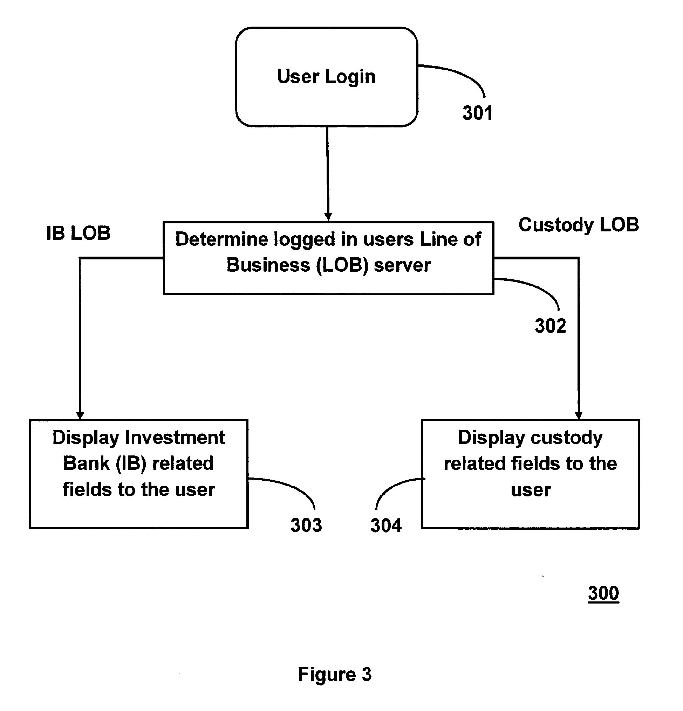

Referring to figure 3 is a flow diagram 300 illustrating the display of LOB-specific event details to a user based on determination of LOB of the user in accordance to an embodiment of the invention.

As illustrated in figure 3, at step 301, a user is logged in to the system hosting the integration of both the functionalities of IB (Investment Bank) LOB server and Custodian LOB server.

At step 302, determination of the LOB server of the user logged in the system is made.

At step 303, IB (Investment Bank) server related field labels such as books, portfolios, portfolio manager, desks, counterparties etc are displayed to the user as a result of determination at step 302 that the user is IB (Investment Bank) specific user.

At step **304,** custody server related field labels such as accounts, business partner, client, customer etc are displayed to the user as a result of determination at step 302 that the user is custody specific user.

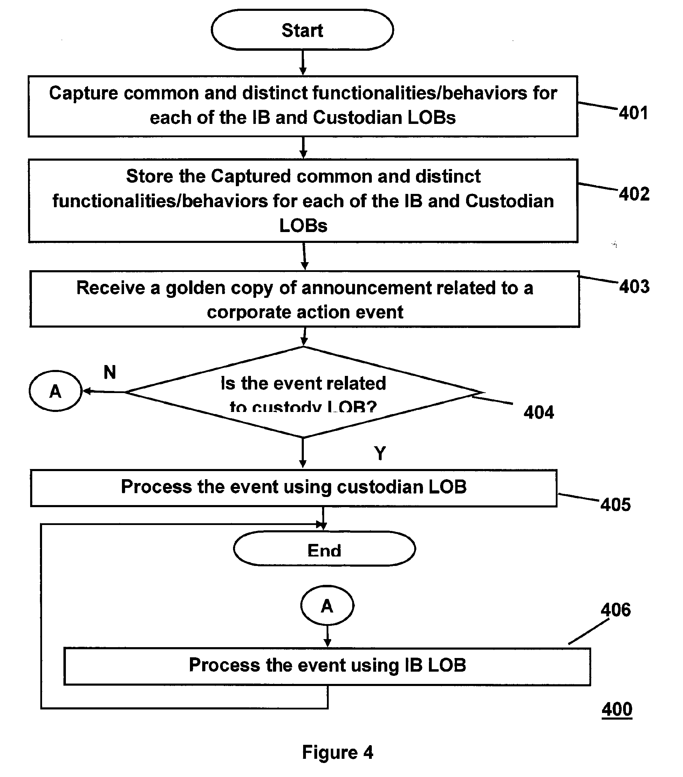

Referring to figure 4 is a flow chart **4 00** d epicting the steps followed for integration of event processing of IB (Investment bank) LOB and custodian LOB in accordance to an exemplary embodiment of the invention.

At step **401,** capturing of common and distinct functionalities or behaviors for each of the IB (Investment Bank) and Custodian LOBs is done.

At step **402,** the captured common and distinct functionalities or behaviors for each of the IB (Investment Bank) and Custodian LOBs are stored.

At step **403,** a golden copy of announcement related to a corporate action event is received.

At step **404,** the determination of LOB for the event received is done.

At step **405,** the event received is processed using custodian LOB if it is determined that the event received is meant for custody LOB in step 404.

At step **406,** the event received is processed using IB LOB if it is determined that the event received is meant for IB LOB in step **404.**

The methodology and techniques described with respect to the embodiments can be performed using a machine or other computing device within which a set of instructions, when executed, may cause the machine to perform any one or more of the methodologies discussed above. In some embodiments, the machine operates as a standalone device. In some embodiments, the machine may be connected (e.g., using a network) to other machines. In a networked deployment, the machine may operate in the capacity of a server or a client user machine in a server-client user network environment, or as a peer machine in a peer-to-peer (or distributed) network environment. The machine may comprise a server computer, a client user computer, a personal computer (PC), a tablet PC, a laptop computer, a desktop computer, a control system, a network router, switch or bridge, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The machine may include a processor (e.g., a central processing unit (CPU), a graphics processing unit (GPU, or both), a main memory and a static memory, which communicate with each other via a bus. The machine may further include a video display unit (e.g. a liquid crystal display (LCD), a flat panel, a solid state display, or a cathode ray tube (CRT)). The machine may include an input device (e.g., a keyboard) or touch-sensitive screen, a cursor control device (e.g., a mouse), a disk drive unit, a signal generation device (e.g., a speaker or remote control) and a network interface device.

The illustrations of arrangements described herein are intended to provide a general understanding of the structure of various embodiments, and they are not intended to serve as a complete description of all the elements and features of apparatus and systems that might make use of the structures described herein. Many other arrangements will be apparent to those of skill in the art upon reviewing the above description. Other arrangements may be utilized and derived there from, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

The preceding description has been presented with reference to various embodiments of the invention. Persons skilled in the art and technology to which this invention pertains will appreciate that alterations and changes in the described structures and methods of operation can be practiced without meaningfully departing from the principle, spirit and scope of this invention.

### ADVANTAGES OF THE INVENTION

The present invention has following advantages:
- The present invention facilitates the income and corporate action (CA) processing for both Investment Bank (IB) and Custody via a single user interface platform.
- The system of the present invention allows users to view the processing of corporate action events for their custody and IB (Investment Bank) line of business in single installation.
- The present invention support for dynamic display of various data elements in several application screens based on user profile (IB user or Custody User)
- The present invention enables reduction in software and hardware costs.
- The present invention enables optimized utilization of hardware, software and man-power resources for achieving the task of processing of plurality of corporate action events.

## Claims

1. A system for real-time processing of a plurality of corporate action events in a capital market framework, the system comprising a central server electronically coupled to a plurality of line-of-business (LOB) servers enabled for handling the said plurality of corporate action events, the central server further comprising:
a) a database (202), the said database further segregated into three sub-layers, each of the said three sub-layers configured to respectively store common functionalities, common functionalities with finer variances and distinct functionalities related to the plurality of LOB servers;
b) a receiving module (204) to receive at least one corporate action event notification feed;
c) an analyzing module (206) to analyze the content of the said notification feed;
d) a determining module (208) to determine from the notification feed content using the functionalities stored in the database at least one appropriate line-of-business (LOB) server; and
e) a processing module (210) to process the received corporate action event by the said determined at least one line-of-business (LOB) server.

2. A system of claim 1, wherein the said plurality of LOB servers may be selected from a group comprising an Investment Bank LOB server, a custodian bank LOB server, an agent LOB server, a counterparty server and combinations thereof.

3. A system of claim 1, further comprising a display module (212) for displaying the details related to the said processed corporate action event by the central server.

4. A method for real-time processing of a plurality of corporate action events received at a central server (101) implemented in a capital market framework, the said method comprising:
a) storing common and distinct functionalities of a plurality of line-of-business (LOB) servers (103,104) responsible for handling the said plurality of corporate action events by means of a database (105) electronically connected to the said central server;
b) receiving (403) at least one corporate action event notification feed on the central server;
c) analyzing (404) the content of said received notification feed;
d) determining at least one appropriate line-of-business (LOB) server based on analyzed content of the notification feed using the functionalities stored in the database; and
e) processing (405,406) the received corporate action event by the said determined at least one line-of-business (LOB) server.

5. A method of claim 4, wherein the said plurality of LOB servers may be selected from a group comprising an Investment Bank LOB server, a custodian bank LOB server, an agent LOB server, a counterparty server and combinations thereof.

6. A method of claim 4, wherein the analysis of notification feed comprises analysis of terminologies and nomenclatures used in the event feed.

7. A method of claim 4, wherein the determination of the said at least one at least one line-of-business (LOB) server is implemented by comparison of the stored functionalities of the plurality of servers with the terminologies and nomenclatures in the received event.

8. A method of claim 4, wherein the sub-events related to the said corporate action event is further processed by the central server utilizing the functionalities of the determined LOB server.
